# EUROPÄISCHE PATENTSCHRIFT

(11) **EP 1 415 409 B1**
(45) Veröffentlichungstag und Bekanntmachung des Hinweises auf die Patenterteilung: **11.02.2009**
(21) Anmeldenummer: 02754878.3
(22) Anmeldetag: 15.07.2002
(51) Int. Cl.: H04B 3/32

(54) **VORRICHTUNG ZUR VERBESSERUNG DER ÜBERTRAGUNGSEIGENSCHAFTEN EINES BÜNDELS ELEKTRISCHER DATENLEITUNGEN UND ANORDNUNG ZUR DATENÜBERTRAGUNG**
DEVICE FOR IMPROVING THE TRANSMISSION PROPERTIES OF A BUNDLE OF ELECTRICAL DATA LINES AND A SYSTEM FOR TRANSMITTING DATA
DISPOSITIF POUR AMELIORER LES PROPRIETES DE TRANSMISSION D'UN FAISCEAU DE LIGNES DE DONNEES ELECTRIQUES ET SYSTEME DE TRANSMISSION DE DONNEES

(30) Priorität: 13.07.2001 EP 01116651
(43) Veröffentlichungstag der Anmeldung: 06.05.2004
(73) Patentinhaber: Broadband United GmbH, 93047 Regensburg (DE)
(72) Erfinder: HECHT, Reinhard, 93047 Regensburg (DE); MANSTORFER, Karl, 93047 Regensburg (DE)
(74) Vertreter: Schaad, Balass, Menzl & Partner AG
(86) Internationale Anmeldenummer: PCT/EP2002/007783
(87) Internationale Veröffentlichungsnummer: WO 2003/009490

(56) Entgegenhaltungen:
- WO-A-97/40587
- US-A- 5 271 037
- US-A- 5 887 032
- US-A- 5 970 088

## Beschreibung

- Die Erfindung betrifft eine Vorrichtung zur Verbesserung der Übertragungseigenschaften eines Bündels elektrischer Datenleitungen gemäss Anspruch 1- sowie eine Anordnung zur Datenübertragung gemäss Anspruch 11.

Bei der Übertragung von Daten über mehrere Datenleitungen, die sich ion unmittelbarer räumlicher Nähe zueinander befinden, besteht das Problem des Übersprechens, insbesondere des Nah- und/oder Fernnebensprechens (Near bzw. Far End Cross Talk, NEXT bzw. FEXT). Derartige Probleme treten insbesondere bei der Beschaltung der eigentlich für Niederfrequenzübertragung ausgelegten Kupferkabel im Zugangsbereich eines Telekommunikationsnetzes mit hochbitratigen Übertragungssystemen auf. Hochbitratige Übertragungssysteme wie xDSL (DigitalSubscriber Line, z.B. HDSL, SDSL, ADSL, VDSL) wurden entwickelt, um die vorhandene Infrastruktur aus Kupferdoppeladern in Ortsnetzkabeln und anderen Fernemeldekabeln für die Übertragung hoher Datenströme nutzbar zu machen. Die mehrfache oder gemischte Beschaltung dieser Kabel mit verschiedenen Übertragungstechniken führt häufig zum Problem der spektralen Inkompatibilität. Dabei stören sich mehrere Übertragungseinrichtungen, die an ein gemeinsames Kabel angeschaltet sind, gegenseitig. Die Fernmeldekabel können häufig nicht optimal genutzt werden. Die bei einer

vorgegebenen Übertragungsqualität mögliche Übertragungskapazipät ist begrenzt. Als Folge dürfen entweder nicht alle Aderpaare beschaltet werden, oder es ergeben sich Einschränkungen in den überbrückbaren Entfernungen.

Der Einfluss der Störungen kann gering gehalten werden, indem die an das Kabelbündel angeschalteten Übertragungsgeräte aufeinander abgestimmt werden, insbesondere synchronisiert werden. Dieses ist jedoch aufwendig und führt zu Einschränkungen bezüglich der verwendeten Modems und Übertragungstechniken.

Aus der US 5,970,088 ist beispielsweise ein Kompensationsverfahren für einen Pool aus N identischen logischen MDSL-Modems bekannt. Es dient zur Kompensation der NEXT Interferenz. Die Sender der Modems sind mit einem Taktgenerator synchronisiert. Die von den N Modems empfangenden Signale werden nach dem Empfang mittels einer Kompensationsschaltung entstört. Die Kompensationsschaltung besteht aus N Untereinheiten, von denen jeweils eine jeweils einem Modem zugeordnet ist. Eine Untereinheit umfasst N adaptive Filter, deren Ausgangssignal zur Korrektur des bereits vom Modem empfangenen und digitalisierten Signals dient. Als Referenzsignal für die adaptiven Filter dient das von jeweils einem der N Modems gesendete Sendesignal. Die Ausgangssignale aller adaptiven Filter einer Untereinheit werden kombiniert und zur Korrektur des bereits empfangenen Empfangssignals verwendet. Das in der US 5,970,088 beschriebene Kompensationsverfahren erfordert N identische Modems und ist daher nicht zum Entstören beliebiger Systeme geeignet. Die Übertragungseigenschaften des Kabels selbst bleiben unverändert, und das bereits empfangene Signal wird nachträglich aufbereitet.

Das Dokument US 5,271,037 offenbart eine Leitungseinrichtung, vorzugsweise eine Leitungsendeinrichtung eines Nachrichtenübertragungssystems, welche Sende- und Empfangsschaltungen enthält, an die Sendeleitungen bzw. Empfangsleitungen angeschlossen sind. Wenigstens eine Empfangsschaltung ist mit einer Schaltungsanordnung zur Kompensation von Nebensprechen ausgerüstet. Eine einzelne Schaltungsanordnung bewirkt die Kompensation des Nebensprechens von mehreren Sendeleitungen auf eine Empfangsleitung. Zur Kompensation wird aus jeder Schaltung ein Referenzsignal des Sendesignals zwischen einem Coder und Verwürfler und einer Leistungsausrüstung abgezweigt und durch ein adaptives Filter ein Kompensationssignal simuliert. Die einzelnen Kompensationssignale werden durch Subtraktionseingänge einer Subtraktionsschaltung dem Empfangssignal zugemischt. Ein Teil des Ausgangssignals der Subtraktionsschaltung ist den Regelsignaleingängen der adoptiven Filter zugeführt, der andere Teil wird zum Empfangssignal weiterverarbeitet.

Der Erfindung liegt die Aufgabe zugrunde, eine Vorrichtung anzugeben, mit der die Übertragungseigenschaften eines Bündels elektrischer Datenleitungen verbessert wird, sodass unabhängig von den an die Datenleitungen angeschalteten Geräten eine Entstörung der Leitungen untereinander und damit eine Erhöhung der Übertragungskapazität ermöglicht wird.

Die Aufgabe wird gelöst durch eine Vorrichtung zur Verbesserung der Übertragungseigenschaften eines Bündels elektrischer Datenleitungen mit den Merkmalen von Anspruch 1.

Die Aufgabe wird weiterhin gelöst durch eine Anordnung zur Datenübertragung mit einer solchen Vorrichtung gemäss Anspruch 9.

Vorteilhafte Weiterbildungen der Erfindung sind in den abhängigen Ansprüchen, der Beschreibung und den Zeichnungen angegeben.

Erfindungsgemäss umfasst die Vorrichtung eine zwischen zwei Anschlüsse angeordnete elektronische Schaltung. Die elektronische Schaltung umfasst wenigstens ein adaptives Filter, mit dem ein auf einer ersten Leitung übertragenes Signal entstört wird. Die Anschlüsse dienen zum Anschluss an ein oder mehrere Kabelbündels und/oder an ein oder mehrere Übertragungsgeräte. Bei diesen kann es sich um Endgeräte handeln. Vorzugsweise ist wenigstens einer der Anschlüsse, z.B. der Eingang der Vorrichtung, an ein Kabelbündel angeschlossen derart, dass die Datenleitungen des Kabelbündels mit der elektronischen Schaltung bzw. deren Datenleitungen in Kontakt stehen. Der andere Anschluss kann zum Anschliessen weiterer Kabelbündel oder zum Anschliessen von übertragungsgeräten ausgebildet sein.

Er simuliert im Anwendungsfall den Ausgang des am Eingang der Vorrichtung angeschlossenen Kabelbünds. Durch die Anschlüsse fungiert die Vorrichtung als "Black Box", die an geeigneten Stellen innerhalb des Übertragungswegs angeordnet werden kann, z.B. zwischen Kabelende und Übertragungsgerät oder zwischen zwei Kabeln. Die Vorrichtung umfasst dazu vorzugsweise auch ein Gehäuse, in dem die Schaltung angeordnet ist. Die Installation der Vorrichtung ist universell und aufwendungsarm möglich.

Indem die Vörrichtung innerhalb der Übertragungsstrecke, z.B. an einem oder beiden Enden des Kabelbündels angeordnet ist, werden die Übertragungseigenschaften des Kabelbündels selbst verbessert. Kenntnisse über die verwendeten Übertragungstechniken bzw. die angeschlossenen Übertragungsgeräte sind nicht notwendig. Die Vorrichtung ist vollständig transparent und unabhängig von der Struktur der angeschlossenen Geräte. Im Gegensatz zu bekannten Schaltungen der Entstörung, die innerhalb der Übertragungsgeräte angeordnet sind, sind erfindungsgemäß keinerlei Eingriffe in die Übertragungsgeräte notwendig. Es wird mit den Signalen gearbeitet, die das Übertragungsgerät an seinen herkömmlichen Schnittstellen zum Kabelbündel abgibt oder empfängt. Es können daher beliebige, auch zukünftige Übertragungsgeräte verwendet werden. Den Netzbetreibern bzw. Kunden müssen daher keine Einschränkungen hinsichtlich der verwendeten Geräte und Übertragungstechniken auferlegt werden, um eine hohe Übertragungsleistung bzw. -qualität zu erhalten.

Adaptive Filter zur Reduzierung bzw. Kompensation einer Störung unbekannter Natur auf einer Signalleitung sind an sich bekannt. Sie sind beispielsweise in B. Widrow und S. Stearns, 'Adaptive Signal Processing', Prentice-Hall, Inc., New Jersey, 1985, beschrieben. Ein auf einer Signalleitung übertragenes zu entstörendes Nutzsignal setzt sich zusammen aus dem ungestörten Signal und dem Störeinfluss der unbekannten Signalquelle. Ein mit dieser Signalquelle korreliertes Signal wird als Referenzsignal einem adaptiven Filter zugeführt. Das Filter erzeugt ein Kompensationssignal, das vom Nutzsignal subtrahiert wird. Das so erhaltene kompensierte Nutzsignal wird dem Filter als Fehlersignal zugeführt. Über einen geeigneten Adaptionsalgorithmus werden die Filterparameter so eingestellt, dass die Leistung des kompensierten Nutzsignals minimiert wird, das somit im Idealfall dem ungestörten Signal entspricht.

Die Erfindung kann in einer Vielzahl von Ausführungsformen realisiert werden, von denen einige in den Zeichnungen dargestellt sind. Jeder zu entstörenden Leitung ist wenigstens ein adaptives Filter zugeordnet. Dieses erzeugt ein Kompensationssignal, welches von dem auf der Leistung übertragenen Nutzsignal subtrahiert wird. Als Referenzsignal für das adaptive Filter dient wenigstens ein von einer weiteren Leitung abgegriffenes Signal, so dass der Störeinfluss, z.B. NEXT und/oder FEXT, der auf dieser Leitung übertragenen Signale reduziert wird. In dieser Variante der Erfindung ist für jeweils ein zu entkoppelndes Paar von Leitungen ein adaptives Filter vorgesehen. Es ist auch möglich, die Referenzsignale nur von denjenigen Leitungen, auf denen gesendet wird, abzugreifen.

Um die Anzahl adaptiver Filter zu reduzieren, werden in einer weiteren Variante die von den störenden Leitungen abgegriffenen Signale zu einem gemeinsamen Referenzsignal kombiniert, wobei beispielsweise ihre direkte oder gewichtete Summe gebildet wird. Dieses Referenzsignal wird dann einem gemeinsamen adaptiven Filter zugeführt.

In einer weiteren vorteilhaften Ausbildungsform, wird das Referenzsignal von einer nicht beschalteten Leitung abgegriffen. Dieses Signal ist eine Abbildung aller Störeinflüsse benachbarter Leitungen, auf denen gesendet oder empfangen wird. Das abgegriffene Signal gibt daher im wesentlichen auch die entsprechenden Störeinflüsse auf die zu entstörende Leitung wieder. Wird es erfindungsgemäss als Referenzsignal für ein adaptives Filter verwendet, gelingt eine schnelle Adaption des Filters Und damit eine schnelle Kompensation.

In einer weiteren bevorzugten Ausführungsform wird ein Referenzsignal ausserhalb des Kabelbündel abgegriffen, beispielsweise an einer externen Antenne. Auf diese Weise können auch externe Störeinflüsse auf einzelne oder alle Datenleitungen kompensiert werden.

Um die erfindungsgemässe Vorrichtung in die Übertragungsstrecke einzubauen, sind vorzugsweise zwei Anschlüsse vorhanden, wobei der eine beispielsweise zum Anschluss des zu entstörenden Kabelbündels und der andere zum Anschluss eines zu einem oder mehreren Teilnehmern führenden Kabelbündels oder zum direkten Anschluss von Übertragungsgeräten, z.B. xDSL-Geräten dient. Die Vorrichtung umfasst des weiteren ein die Anschlüsse verbindendes Bündel aus vorrichtungsinternen Verbindungsleitungen, wobei diese Verbindungsleitungen wenigstens einen Anschlusspunkt aufweisen, über welchen Referenz- und/oder Fehlersignale abgegriffen und/oder Korrektursignale zugeführt werden können. Am externen Kabel selbst müssen daher keine Modifikationen vorgenommen werden.

Zum Entstören von Aderpaaren umfasst die Vorrichtung des weiteren Gabelschaltungen, mit denen die Sende- und Empfangssignale, welche sich gemeinsam auf jedem angeschalteten Aderpaar des Kabelbündels befinden, getrennt und jeweils einer eigenen internen Verbindungsleitung zugeordnet werden. An diesen Verbindungsleitungen können dann an geeigneter Stelle die Referenz- und Fehlersignale zur Einstellung der adaptiven Filter abgegriffen werden und die erzeugten Korrektursignale zugeführt werden. Bei einem Ausfall der adaptiven Filter, z.B. bei einem Stromausfall, wird der Datenfluss nicht unterbrochen.

Für eine möglichst gute Kompensation wird jede Datenleitung gegenüber jeder weiteren Datenleitung entkoppelt, indem beispielsweise für jede weitere Datenleitung ein adaptives Filter vorgesehen ist oder die von den weiteren Datenleitungen abgegriffenen Signale einem gemeinsamen adaptiven Filter als Referenzsignal zugeführt werden. Da das Übersprechen stark entfernungsabhängig ist, kann es für viele Anwendungen ausreichen, nur die unmittelbar benachbarten Datenleitungen gegeneinander zu entstören. Bei Fernmeldekabeln sind häufig zwei Paare von Kupferdoppeladern miteinander verdrillt. Mehrere solcher Sternvierer sind in einem gemeinsamen Grundbündel enthalten. Wiederum mehrere solcher Grundbündel bilden das Fernmeldekabel. In einem solchen Fall werden vorzugsweise wenigstens die Datenleitungen eines Sternenvierers und besonders bevorzugt auch die eines Grundbündels gegeneinander entstört.

Zur Einstellung der adaptiven Filter sind eine Vielzahl von Adaptionsmethoden bekannt, die alle die Minimierung des kompensierten Signals (Fehlersignal) anstreben. Beispielsweise können ein Least-Mean-Square (LMS)-Algorithmus, der RLS-Algorithmus (Recursive-Least-Squares-Algorithmus), Self-Recovering-Equalization bzw. Blind-Equalization-Algorithmen oder ein anderes geeignetes Verfahren verwendet werden. Das Verfahren der Leistungsminimierung hat den Vorteil, dass die erfindungsgemässe Vorrichtung transparent bezüglich der Übertragungsraten, Leitungscodes und anderer Übertragungsparameter ist und keine Trainings- oder Synchronisationsverfahren benötigt werden.

Ausführungsbeispiele der Erfindung sind in den Zeichnungen dargestellt und im Folgenden beschrieben. Dabei zeigen rein schematisch:
- Fig. 1: Die prinzipielle Anordnung zweier erfindungsge- mässer Vorrichtungen innerhalb einer Übertra- gungsstrecke;
- Fig. 2: ein erstes Beispiel für eine erfindungsgemässe Schaltungsanordnung mit einem Referenzpunkt pro Aderpaar;
- Fig. 3: ein weiteres Beispiel für eine erfindungsgemässe Schaltungsanordnung mit zwei Referenzpunkten pro Aderpaar;
- Fig. 4: ein weiteres Beispiel für eine erfindungsgemässe Schaltungsanordnung mit je einem Summierglied für Sende- bzw. Empfangssignale benachbarter Leitungen;
- Fig. 5: eine weitere erfindungsgemässe Schaltungsanord- nung mit einem Summierglied für sämtliche Stör- signale.

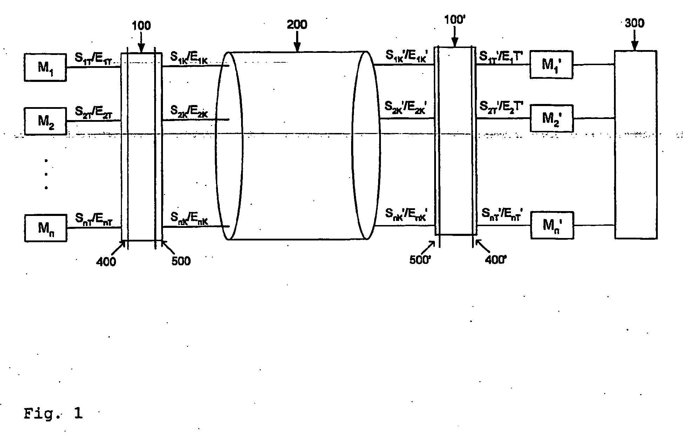

Fig. 1 zeigt eine erfindungsgemässe, Anordnung zur Datenübertragung im Anwendungsfall mit einer zentralen Vermittlungseinrichtung 300 und einer Mehrzahl von Übertragungsgeräten M₁, M₂ ... Mₙ sowie M₁' , M₂' , ... Mₙ' , die vorzugsweise xDSL-Modems sind. Die Übertragungsgeräte M₁ und M₁', M₂ und M₂' ... Mₙ und Mₙ' stellen 1... n beliebige xDSL-Verbindungen dar. Sie sind über jeweils ein Aderpaar S₁/E₁, S₂/E₂ ... Sₙ/Eₙ verbunden. Die Bezugszeichen S_{iT}, S_{iR}, S'_{iT}, S'_{iK}, E_{iT}, E_{iK}, E'_{iT,} E'_{iK} bezeichnen jeweils das teilnehmer- bzw. kabelseitige Teilstück des Sende- bzw. Empfangswegs auf den beiden Kabelseiten. Die Aderpaare sind zu einem Bündel 200 von Leitungen zusammengefasst und befinden sich im Bereich dieses Kabels in unmittelbarer räumlicher Nähe zueinander. Zur Kompensation ihrer gegenseitiger Störeinflüsse befinden sich eine, erforderlichenfalls zwei erfindungsgemässe Vorrichtungen 100 bzw. 100' im Übertragungsweg zwischen den Modems und den Aderpaaren des Kabels. An ihrem vermittlungsseitigen Ende sind die einzelnen Aderpaare des Kabelbündels 200 mit den Übertragungsgeräten M₁', M₂' ... Mₙ' beschaltet. An ihrem teilnehmerseitigen Ende sind einzelne Aderpaare mit den Übertragungsgeräten M₁, M₂ ... Mₙ beschaltet. Dazu dient jeweils ein erster Anschluss 400, 400'. Zum Anschliessen des Kabelbündels dient jeweils ein zweiter Anschluss 500, 500'. Die teilnehmerseitigen Aderpaare können auch zu einem weiteren Kabelbündel zusammengefasst sein.

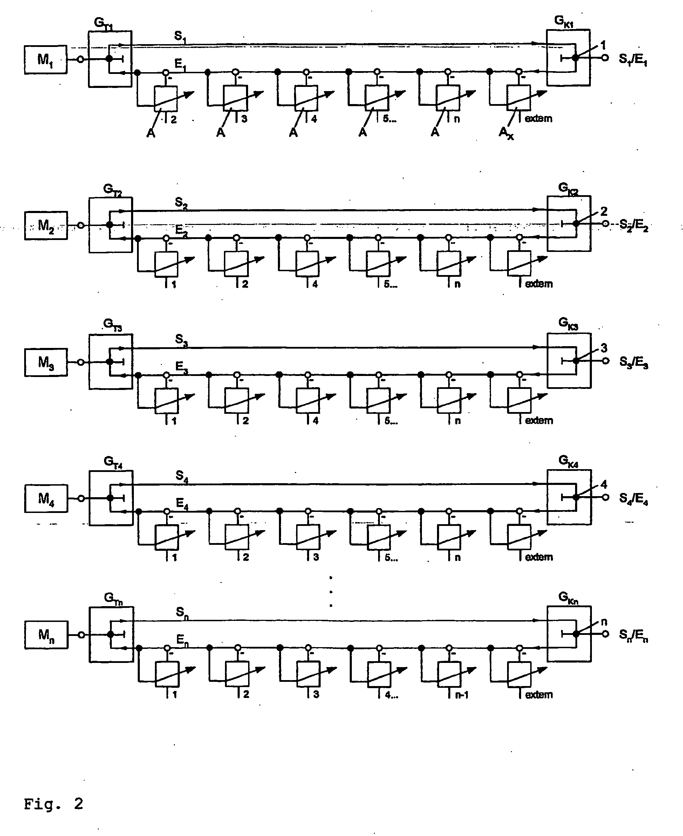

Fig. 2 zeigt ein erstes Beispiel für eine Schaltungsanordnung, die in einer erfindungsgemässen Vorrichtung verwendet werden kann. Eine Mehrzahl von Aderpaaren, S₁/E₁, S₂/E₂ ... Sₙ/Eₙ, welche sowohl mit dem Sende- als auch dem Empfangssignal des zugehörigen Modempaares M₁ M₁', M₂ M'_{2 ...} Mₙ Mₙ' beschaltet sind, werden gegeneinander und gegen eine externe Störungsquelle entstört. Dazu wird jedes Aderpaar des Kabelbündels, welches zu Störungen der anderen Aderpaare beiträgt, mittels hochwirksamer Gabelschaltungen G_{K1}, G_{K2} ... G_{Kn} an der Kabelseite bzw. G_{T1,} G_{T2} ... G_{Tn} an der Teilnehmerseite in die Sendeleitungen S₁, S₂ ... Sₙ und die Empfangsleitungen E₁, E₂ ... Eₙ aufgeteilt. Zur Entstörung der Empfangssignale sind jeder Empfangsleitung E₁, E₂ ... Eₙ n adaptive Filter A zugeordnet, wobei n die Anzahl der vorhandenen Aderpaare angibt. Die adaptiven Filter erhalten als Referenzsignal das am kabelseitigen Gabelpunkt 1, 2 ... n jeweils eines benachbarten Aderpaares abgegriffene Signal. Dieses setzt sich zusammen aus dem auf diesem Aderpaar gesendeten und empfangenen Signal sowie aus den Störsignalen von den benachbarten Aderpaaren. Jeweils zwei Aderpaaren ist somit ein adaptives Filter zugeordnet, um das auf der ersten Empfangsleitung, z.B. E₁, übertragene Signal gegen das auf einem weiteren Aderpaar, beispielsweise S₂/E₂, übertragene Signal zu entstören. Ein weiteres adaptives Filter Aₓ, ist zur Kompensation eines externen Störeinflusses vorgesehen. Die erfindungsgemässe Schaltungsanordnung umfasst insgesamt eine Matrix aus n x n adaptiven Filtern, mit denen sämtliche Störeinflüsse wechselseitig kompensiert werden. Indem das Referenzsignal am Gabelpunkt benachbarter Adern abgegriffen wird, wird sowohl das Nahals auch das Fernnebensprechen kompensiert.

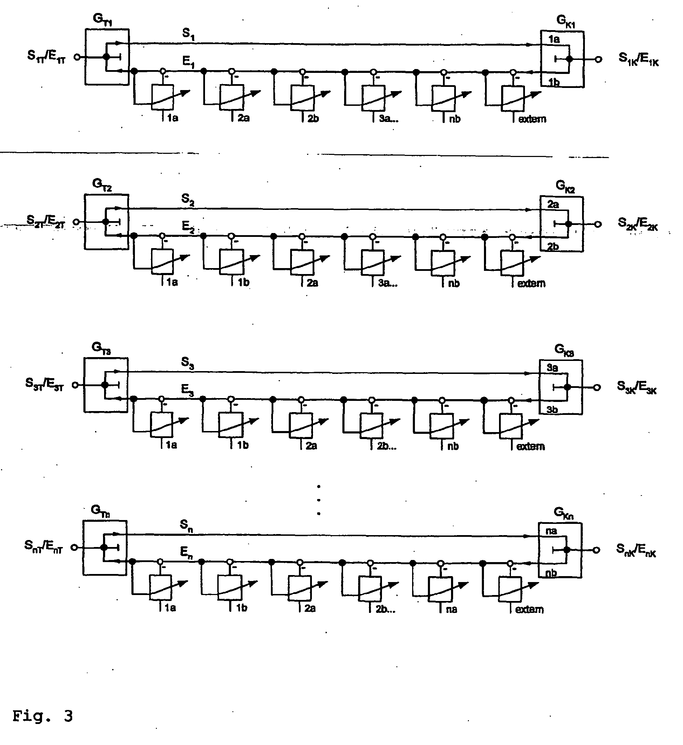

Fig. 3 zeigt eine weitere Schaltungsanordnung, bei der beispielsweise zum Entstören eines Empfangssignals auf dem Aderpaar S₁/E₁ pro benachbartem störenden Aderpaar zwei Referenzpunkte 2a, 2b; ... na, nb und die entsprechende Anzahl adaptiver Filter verwendet werden. Die Sende- und Empfangssignale werden separat als Referenzsignale verwendet. Des weiteren ist auch für das eigene Aderpaar ein adaptives Filter vorgesehen, welches als Referenzsignal das vom eigenen Modem gesendete Signal am Referenzpunkt 1a abgreift und damit eine Echokompensation bewirkt. Wie bei der Schaltungsanordnung gemäss Fig. 2 ist ein weiteres adaptives Filter für die Kompensation externer Störungen vorgesehen.

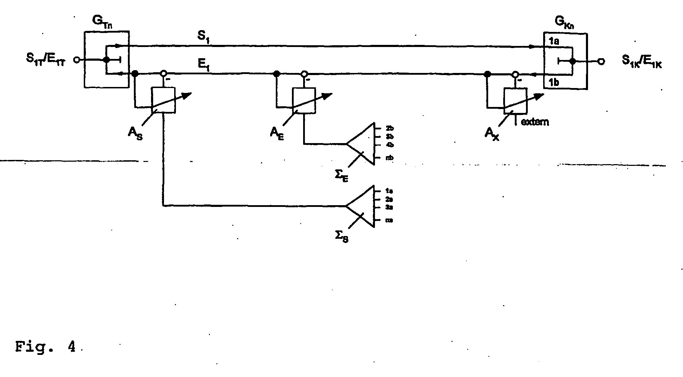

Fig. 4. zeigt ein weiteres Beispiel einer erfindungsgemässen Schaltungsanordnung, wobei nur ein Aderpaar und die zugeordneten adaptiven Filter dargestellt sind. Jedem Aderpaar sind vorliegend drei adaptive Filter A_{S}, A_{E}, A_{X}, zugeordnet. Ein Filter A_{S} erhält als Referenzsignal die in einem Summierglied Σₛ aufsummierte Summe sämtlicher Sendesignale von allen oder nur den übrigen Aderpaaren. Das zweite Filter A_{E} erhält als Referenzsignal die in einem Summierglied Σ_{E} aufsummierte Summe sämtlicher Empfangssignale der übrigen Aderpaare. Ein Filter A_{X} dient zur Kompensation externer Störungen. Die Referenzpunkte 1a, 1b... na, nb entsprechen denen aus Fig. 3. Diese Anordnung kann einfach und kostengünstig realisiert werden, da die Anzahl adaptiver Filter gegenüber den Beispielen nach Fig.2 und 3 reduziert ist.

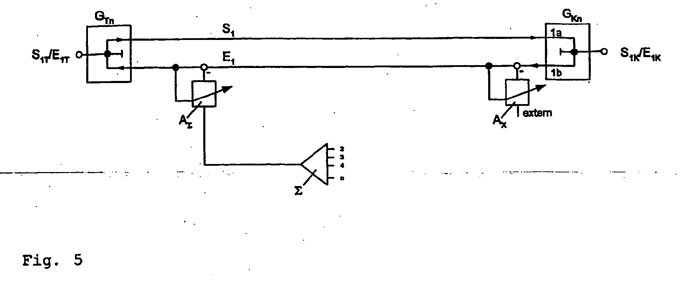

Eine weitere Vereinfachung ist in Fig. 5 dargestellt. Hierbei ist lediglich ein adaptives Filter A_{Σ} für sämtliche von benachbarten Aderpaaren abgegriffenen Störsignale vorhanden. Diese werden in einem Summierglied Σ aufsummiert, wobei das Summensignal als Referenzsignal dient. Ein Filter A_{X} dient wieder zur Kompensation externer Störungen.

In einer weiteren Vereinfachung der Schaltungsanordnung ist es denkbar, dass die Funktion von A_{X} in A_{Σ} integriert wird, so dass A_{X} entfallen kann.

Eine weitere Vereinfachung ergibt sich dadurch, dass der lieferant für die Referenzsignale ein nicht beschaltetes Aderpaar verwendet. Auf ihm sind bei geeigneter Lage innerhalb des Kabels naturgemäß alle störenden Signale vorhanden. Somit kann das Summierglied entfallen und durch einen Operationsverstärker ersetzt werden, an welchem das Referenzaderpaar angeschlossen ist und welcher das Störsignal entkoppelt jedem Transversalfilter zur Verfügung stellt. Ein Filter A_{X} dient wieder zur Kompensation externer Störungen.

Weiterhin möglich ist eine Ausbildung der vorgegebenen Lösungsvariante dadurch, dass das Referenzaderpaar und das externe Störsignal an ein Summierglied mit nur noch zwei Eingängen angeschaltet wird. Dadurch kann das adaptive Filter A_{X} entfallen.

## Patentansprüche

1. Vorrichtung zur Verbesserung der Übertragungseigenschaften eines Bündels elektrischer Datenleitungen, insbesondere eines Bündels Kupferdoppeladern, mit einem Anschluss (500; 500') zum Anschluss an die Datenleitungen (S₁ₖ/E₁ₖ ... Sₙₖ/Eₙₖ; S₁ₖ'/E₁ₖ' ... Sₙₖ'/Eₙₖ') des externen Bündels (200) und einer elektronischen Schaltung, welche wenigstens ein adaptives Filter (A) umfasst, das als Eingangssignal ein Signal einer ersten Datenleitung (E₁ₖ; E₂ₖ; ..) des externen Bündels (200) elektrischer Datenleitungen empfängt, dem ein Referenzsignal (1, 2, .., n) zugeführt wird und das als Ausgangssignal ein korrigiertes Signal des Signals der ersten Datenleitung erzeugt, wobei das Fehlersignal für das adaptive Filter das korrigierte Signal ist, wobei das Referenzsignal (1, 2, .. , n) für das adaptive Filter (A) wenigstens ein von einer zweiten Datenleitung des externen Bündels (200) elektrischer Datenleitungen abgegriffenes Signal und / oder ein externes Signal (extern) ist, ein weiterer Anschluss (400; 400') zum Anschluss an Datenleitungen eines weiteren externen Kabelbündels und / oder externe Übertragungsgeräte (M₁ .. Mₙ; M₁' .. Mₙ') ausgelegt ist,
wobei die elektronische Schaltung zwischen den Anschlüssen (500; 500', 400; 400') angeordnet ist,
ein die Anschlüsse (400, 500; 400', 500') verbindendes Bündel aus vorrichtungsinternen Verbindungsleitungen vorhanden ist, wobei die vorrichtungsinternen Verbindungsleitungen wenigstens einen Anschlusspunkt aufweisen, über welchen Referenz- und/oder Fehlersignale abgegriffen und/oder Korrektursignale zugeführt werden können,
und
das zu entstörende Bündel Aderpaare umfasst, die aus jeweils zwei elektrischen Datenleitungen gebildet sind und auf denen Sende- und Empfangssignale gemeinsam übertragbar sind, wobei die Vorrichtung für jedes Aderpaar zwei vorrichtungsinterne Verbindungsleitungen und entsprechende ein- und ausgangsseitige Gabelschaltungen aufweist, mit denen die Sende- und Empfangssignale getrennt und jeweils einer eigenen vorrichtungsinternen Verbindungsleitung zugeordnet werden.

2. Vorrichtung nach Anspruch 1, **dadurch gekennzeichnet, dass** jeder zu entstörenden Datenleitung mehrere adaptive Filter zugeordnet sind, die als Referenzsignale jeweils ein von einer weiteren Datenleitung abgegriffenes Signal erhalten.

3. Vorrichtung nach Anspruch 1 oder 2, **dadurch gekennzeichnet, dass** ein adaptives Filter (A_{S}, A_{E}) ein Referenzsignal erhält, das eine Kombination mehrerer von weiteren Datenleitungen augegriffeher Signale (1a...1n; 2b...bn) ist, vorzugsweise die Summe (Σ_{S}; Σ_{E}) dieser Signale.

4. Vorrichtung nach einem der vorangegangenen Ansprüche, dardurch **gekennzeichnet**, dass wenigstens ein Referenzsignal von einer nicht zur Datenübertragung verwendeten Datenleitung abgegriffen wird.

5. Vorrichtung nach einem der vorangegangenen Ansprüche, **dadurch gekennzeichnet, dass** wenigstens ein Referenzsignal (extern) von einer ausserhalb des Bündels angeordneten Antenne abgegriffen wird.

6. Vorrichtung nach einem der Ansprüche 1 bis 5, **dadurch gekennzeichnet, dass** das Fehlersignal an einer ersten Datenleitung zugeordneten ersten Verbindungsleitung anliegt und das Referenzsignal zum Entstören der ersten Datenleitung von einer der zweiten Datenleitung zugeordneten zweiten Verbindungsleitung abgegriffen wird.

7. Vorrichtung nach Anspruch 6, **dadurch gekennzeichnet, dass** jeweils das Empfangssignal entstört wird, indem als Referenzsignal das Sendesignal oder das kombinierte Sende- und Empfangssignal wenigstens eines weiteren Aderpaars oder ein kombiniertes Sende- oder Sende- und Empfangssignal mehrerer weiterer Aderpaare durch Abgreifen an den entsprechenden vorrichtungsinternen Verbindungsleitungen verwendet wird.

8. Vorrichtung nach Anspruch 6 oder 7, **dadurch gekennzeichnet, dass** die Aderpaare zur Datenübertragung gemäss einem xDSL-Verfahren verwendet werden.

9. Anordnung zur Datenübertragung mit wenigstens einem Bündel elektrischer Datenleitungen, Übertrangungsgeräten (M₁..Mₙ; M'₁..Mₙ') und wenigstens einer Vorrichtung (100, 100') nach einem der vorangegangenen Ansprüche, die wenigstens an einem der Kabelenden im Übertragungsweg angeordnet ist.

10. Anordnung nach Anspruch 9, **dadurch gekennzeichnet, dass** die Vorrichtung im Bereich eines Hauptverteilers angeordnet ist.

11. Anordnung nach Anspruch 9 oder 10, **dadurch gekennzeichnet, dass** xDSL-Einrichtungen an die Datenleitungen bzw. direkt an die Vorrichtung angeschaltet sind.

## Claims

1. Apparatus for improvement of the transmission characteristics of a bundle of electrical data lines, in particular of a bundle of copper double wires, having a connection (500; 500') for connection to the data lines (S₁ₖ/E₁ₖ ... Sₙₖ/Eₙₖ; S₁ₖ'/E₁ₖ' ... Sₙₖ'/Eₙₖ') in the external bundle (200) and an electronic circuit which has at least one adaptive filter (A) which receives as an input signal a signal on a first data line (E₁ₖ; E₂ₖ; ..) in the external bundle (200) of electrical data lines, to which a reference signal (1, 2, .., n) is supplied and which produces as an output signal a corrected signal from the signal on the first data line, with the error signal for the adaptive filter being the corrected signal, with the reference signal (1, 2, .., n) for the adaptive filter (A) being at least one signal which is tapped off from a second data line in the external bundle (200) of electrical data lines and/or (externally) being an external signal, with a further connection (400; 400') being designed for connection to data lines in a further external cable bundle and/or external transmission appliances (M₁ .. Mₙ; M₁' ..Mₙ'), with the electronic circuit arranged between the connections (500; 500', 400; 400') with a bundle, which connects the connections (400, 500; 400', 500'), of apparatus-internal connecting lines being present, with the apparatus-internal connecting lines having at least one connecting point, via which reference and/or fault signals can be tapped off and/or correction signals can be supplied, and the bundle to be suppressed comprising wire pairs which are each formed from two electrical data lines and on which transmission and received signals can be transmitted jointly, with the apparatus for each wire pair having two apparatus-internal connecting lines and corresponding input and output hybrid circuits, by means of which the transmission and received signals are separated and are in each case associated with their own apparatus-internal connecting line.

2. Apparatus according to Claim 1, **characterized in that** each data line to be suppressed has two or more associated adaptive filters, which each receive a signal, which is tapped off from a further data line, as reference signals.

3. Apparatus as claimed in Claim 1 or 2, **characterized in that** an adaptive filter (A_{S}, A_{E}) receives a reference signal which is a combination of two or more signals (1a..!n; 2b..nb) which are tapped off from further data lines, preferably the sum Σ_{S}; Σ_{E}) of these signals.

4. Apparatus as claimed in one of the preceding claims, **characterized in that** at least one reference signal is tapped off from a data line which is not used for data transmission.

5. Apparatus as claimed in one of the preceding claims, **characterized in that** at least one reference signal is tapped off (externally) from an antenna which is arranged outside the bundle.

6. Apparatus as claimed in one of Claims 1 to 5, **characterized in that** the fault signal is applied to a first connecting line which is associated with the first data line, and the reference signal is tapped off from a second connecting line, which is associated with the second data line, for suppression of the first data line.

7. Apparatus as claimed in Claim 6, **characterized in that** the received signal is in each case suppressed by using as the reference signal the transmission signal or the combined transmission and received signal on at least one further wire pair, or a combined transmission or transmission and received signal on two or more further wire pairs, by tapping off from the appropriate apparatus-internal connecting lines.

8. Apparatus as claimed in Claims 6 or 7, **characterized in that** the wire pairs are used for data transmission based on an xDSL method.

9. Arrangement for data transmission having at least one bundle of electrical data lines, transmission appliances (M1..Mn; M'1..Mn') and at least one apparatus (100, 100') as claimed in one of the preceding claims, which is arranged at at least one of the cable ends in the transmission path.

10. Arrangement as claimed in Claim 9, **characterized in that** the apparatus is arranged in the area of a main distribution board.

11. Arrangement according to Claim 9 or 10, **characterized in that** xDSL devices are connected to the data lines and/or directly to the apparatus, respectively.

## Revendications

1. Dispositif d'amélioration des propriétés de transmission d'un faisceau de conducteurs électriques de données, en particulier d'un faisceau de fils doubles en cuivre, qui présente un raccord (500; 500') destiné à être raccordé aux conducteurs de données (S₁ₖ/E₁ₖ... Sₙₖ/Eₙₖ; S₁ₖ' /E₁ₖ' ... Sₙₖ' /Eₙₖ') du faisceau externe (200) et un circuit électronique qui comprend au moins un filtre adaptatif (A) qui reçoit comme signal d'entrée un signal d'un premier conducteur de données (E₁ₖ; E₂ₖ; ...) du faisceau externe (200) de conducteurs électriques de données, auquel un signal de référence (1, 2, ..., n) est apporté et qui délivre comme signal de sortie un signal corrigé du signal du premier conducteur de données, le signal d'erreur du filtre adaptatif étant le signal corrigé, le signal de référence (1, 2, ..., n) du filtre adaptatif (A) étant au moins un signal prélevé sur un deuxième conducteur de données du faisceau externe (200) de conducteurs électriques de données et/ou un signal externe (externe), un autre raccord (400; 400') étant destiné à être raccordé à des conducteurs de données d'un autre faisceau externe de câbles et/ou à des appareils externes de transmission (M₁... Mₙ; M₁' ...Mₙ'), le circuit électronique étant disposé entre les raccords (500, 500', 400, 400'), un faisceau de conducteurs de liaison internes au dispositif étant prévu pour relier les raccords (400, 500; 400', 500'), les conducteurs de liaison internes au dispositif présentant au moins un point de raccordement par lequel les signaux de référence et/ou les signaux d'erreur peuvent être prélevés et/ou les signaux de connexion peuvent être amenés et le faisceau à déparasiter comprenant des paires de fils qui sont formées chacune de deux conducteurs électriques de données et sur lesquels des signaux d'émission et de réception peuvent être transmis en commun, le dispositif présentant pour chaque paire de fils deux conducteurs de liaison internes au dispositif et des circuits appropriés de bifurcation du côté de l'entrée et du côté de la sortie par lesquels les signaux d'émission et les signaux de réception sont séparés et attribués chacun à un conducteur propre de liaison interne au dispositif.

2. Dispositif selon la revendication 1, **caractérisé en ce que** plusieurs filtres adaptatifs qui reçoivent comme signaux de référence un signal prélevé sur un autre conducteur de données sont associés à chaque conducteur de données à déparasiter.

3. Dispositif selon les revendications 1 ou 2, **caractérisé en ce qu'**un filtre adaptatif (A_{S}, A_{E}) reçoit un signal de référence qui est une combinaison de plusieurs signaux (la... 1n; 2b... nb) prélevés sur plusieurs conducteurs de données et de préférence la somme (Σ_{S}; Σ_{E}) de ces signaux.

4. Dispositif selon l'une des revendications précédentes, **caractérisé en ce qu'**au moins un signal de référence est prélevé sur un conducteur de données non utilisé pour le transfert de données.

5. Dispositif selon l'une des revendications précédentes, **caractérisé en ce qu'**au moins un signal de référence est prélevé à l'extérieur par une antenne disposée à l'extérieur du faisceau.

6. Dispositif selon l'une des revendications 1 à 5, **caractérisé en ce que** le signal d'erreur est appliqué sur un premier conducteur de liaison associé au premier conducteur de données et **en ce que** le signal de référence utilisé pour déparasiter le premier conducteur de données est prélevé sur un deuxième conducteur de liaison associé au deuxième conducteur de données.

7. Dispositif selon la revendication 6, **caractérisé en ce que** le signal de réception est déparasité en utilisant comme signal de référence le signal d'émission ou le signal combiné d'émission et de réception d'au moins une autre paire de fils ou un signal combiné d'émission ou d'émission et de réception de plusieurs autres paires de fils par prélèvement sur les conducteurs de liaison internes au dispositif qui y correspondent.

8. Dispositif selon les revendications 6 ou 7, **caractérisé en ce que** les paires de fils sont utilisées pour transmettre des données dans un procédé xDSL.

9. Dispositif de transfert de données qui présente au moins un faisceau de conducteurs électriques de données, des appareils de transmission (M₁... Mₙ; M₁' ... Mₙ') et au moins un dispositif (100, 100') selon l'une des revendications précédentes, et disposé au moins sur une des extrémités du câble dans le parcours de transmission.

10. Système selon la revendication 9, **caractérisé en ce que** le dispositif est disposé dans la zone d'un répartiteur principal.

11. Système selon les revendications 9 ou 10, **caractérisé en ce que** des dispositifs xDSL sont raccordés aux conducteurs de données et/ou directement au dispositif, respectivement.
